# EUROPEAN PATENT APPLICATION

(11) **EP 1 265 127 A2**
(43) Date of publication of application: **11.12.2002**
(21) Application number: 02253369.9
(22) Date of filing: 14.05.2002
(51) Int. Cl.: G06F 3/02

(54) **A removable keyboard attachment for information devices**

(30) Priority: 07.06.2001 US 876670
(71) Applicant: Hewlett-Packard Company, Palo Alto, CA 94304 (US)
(72) Inventor: Lee, Man Wei, Singapore 169016 (SG); Siow, Wee Min, Singapore 410661 (SG); Hoong, Ting Yeow, Singapore 487138 (SG)
(74) Representative: Jehan, Robert

(57) **Abstract**

The invention relates to a removable keyboard attachment (28) for a device (10) such as a mobile telephone or personal digital assistant. The removable keyboard attachment (28) is preferably arranged for pivotal connection (36) to the device. The removable keyboard attachment (28) includes a keyboard (26) so as to enable ready input to the device (10) via the keyboard (26).

## Description

The present invention relates to a removable keyboard attachment for a device. The device may typically include an information device such as a mobile phone or personal digital assistant (PDA).

Most portable devices like mobile phones and personal digital assistants do not have a keyboard for user input. Without a keyboard the method of inputting information to the device is very slow and cumbersome. Accordingly, it is extremely desirable and advantageous for keyboards to be provided for these portable devices.

Although some attempts have been made to address the need to include a keyboard with such devices, the result has been an assembly which is no longer readily portable. For example, one solution has been to attach a keyboard to the front or lower surface of the device so that the keyboard becomes integral to the device. However, when the keyboard is no longer in-use it must be removed from the device and then the user is left with the dilemma as to what to do with the keyboard. Given its size, it is difficult and cumbersome to carry and thus the portability feature of the overall device is lost.

The present invention seeks to address the above problems.

According to a first aspect of the present invention there is provided a keyboard attachment including a keyboard member having a keyboard, electrical connection means for detachably connecting the keyboard to an electronic device and attachment means for detachably mounting the keyboard member to the electronic device, said attachment means enabling attachment and detachment of the keyboard member to the electronic device without any damage thereto.

Preferably, the keyboard attachment is sized to be substantially the same or of a smaller dimension than the device. Preferably, the keyboard attachment is arranged to overlay a front face of the device when it is attached to the device.

Preferably, during use of the device, the keyboard attachment is connected to the device by an electrical connection, for example a flexible or ribbon cable connected with mating end connectors.

Preferably, the keyboard attachment includes means to enable the user to view the screen of the device when the keyboard attachment is positioned to overlay the front face of the device.

Preferably, the viewing means is an aperture or opening in the keyboard attachment which is aligned with the display screen of the device so that the user can view the display screen through the aperture or opening. The viewing means may also include a transparent portion of the keyboard member.

Preferably, the keyboard attachment is arranged to be connected to the device via a serial port and connector arrangement, or a universal serial bus (USB) and connector arrangement.

In a preferred form of the invention, the keyboard attachment is arranged to be pivotably attached to the device or to a frame to which the device is attached. The keyboard attachment is preferably arranged to pivot between an in-use position in which it overlays the front face of the device and an access position in which the keyboard attachment is pivoted to a position away from the device and whereby the user can readily access the front face of the device.

Locking means is preferably provided between the keyboard attachment or the keyboard and the device or the frame of the device, to enable the keyboard attachment or keyboard to be locked in the in-use position. The locking means preferably prevents accidental pivotable movement of the keyboard attachment or keyboard relative to the device.

The removable keyboard attachment may additionally include a cover arranged to cover the entire keyboard or alternatively arranged to cover the viewing means so as to provide protection to the display screen of the device.

The removable keyboard attachment may additionally include a light source to provide light to the device. The light source may run along either longitudinal side of the keyboard attachment.

The removable keyboard attachment is preferably arranged to be secured to the device using a hinge attachment previously provided to attach a conventional cover to the device.

Preferably, the keyboard attachment is substantially made of a plastics material. It is lightweight so that when the keyboard attachment is attached to the device to form a combined unit, the combined unit is not overly heavy as compared with the device alone.

In accordance with another aspect of the invention, there is provided a keyboard attachment for a device having a display screen and at least one input, said keyboard attachment incorporating a keyboard which is arranged to be connected to the device so that the keyboard can be used to provide input to the device, said keyboard attachment including support means arranged to support the device when it is connected to the keyboard attachment and wherein when the device is not in use, the keyboard attachment can be attached to the device to form a combined unit in which the display screen and said at least one input are located adjacent the keyboard attachment.

Preferably, the support means is arranged so that the device during use is supported so that the display screen of the device can be readily viewed by the user.

Preferably, the support means includes an inclined rest surface. The support means is preferably movable between a position in which it is at least partially contained within the keyboard member and a position in which it extends thereform.

The support means may also include a serial port arranged to engage with a mating serial port on the device. In one preferred arrangement the support means includes at least one horizontal retraction member and at least one pivotal support arm pivotally attached to a free end of the at least one horizontal retraction member.

In accordance with another aspect of the invention there is provided a keyboard attachment for a device having a display screen and at least one input, said keyboard attachment including a keyboard member incorporating a keyboard which is arranged to be connected to the device so that they keyboard can be used to provide input to the device when it is connected to the device and a support means arranged to support the device during use thereof so that the display screen of the device can be readily viewed by the user and wherein the support means is movable between a position in which it is at least partially contained within the keyboard member and a position in which it extends therefrom.

Embodiments of the invention will now be described, by way of example only, with reference to the accompanying drawings, in which:
Figure 1 is a perspective view of a portable information device with conventional cover attached thereto in a closed position.
Figure 2 is a perspective view of a portable information device incorporating a keyboard attachment with cover, shown in the closed position, in accordance with a first embodiment of the invention.
Figure 3 is a view similar to that shown in Figure 2 but with the cover in the open position.
Figure 4 is a view similar to Figures 2 and 3 but with the keyboard attachment and cover in the access position.
Figure 5 is an assembly view of the device and keyboard attachment with cover as shown in Figures 2 to 4.
Figure 6 is a side view of a portable information device, with a keyboard attachment and cover in an open or access position.
Figure 7 is an enlarged perspective view showing the locking studs of the keyboard attachment and the corresponding apertures in the side wall of the device.
Figure 8 is a perspective view of the hinge of the cover and the detent mechanism.
Figure 9 is a side view of the device with a part of the side wall removed so that the hinge receiving aperture can be viewed.
Figure 10 is a front view of a portable information device with a keyboard attachment in accordance with a second embodiment of the invention attached thereto.
Figure 11 is a side view of the device and keyboard attachment shown in Figure 10.
Figure 12 is a side view of a keyboard attachment and device in accordance with a third embodiment of the invention.
Figure 13 is a plan view of the keyboard attachment and device shown in Figure 12.
Figure 14 is a side view of the keyboard attachment and device shown in Figure 12.
Figure 15 is a top view of the keyboard attachment and device shown in Figure 12 and showing schematically the retraction of the keyboard attachment into the device.

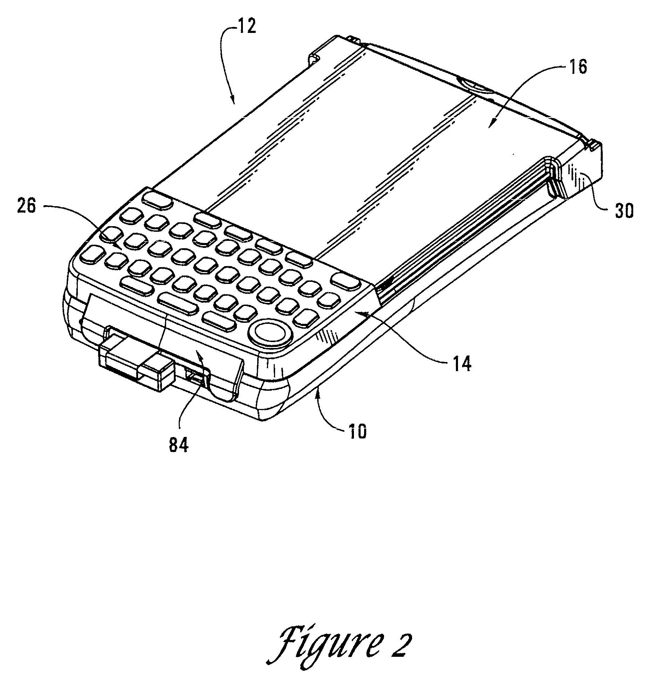

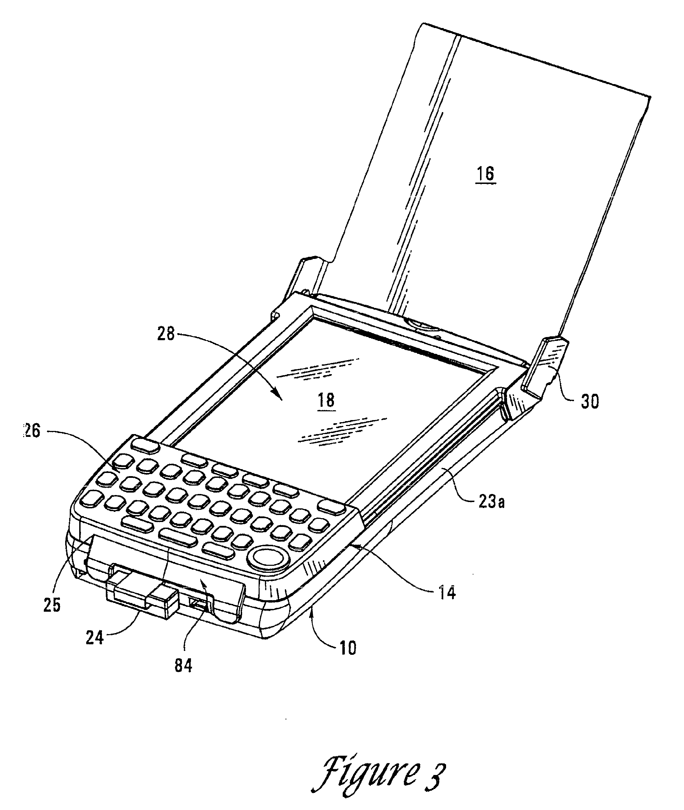

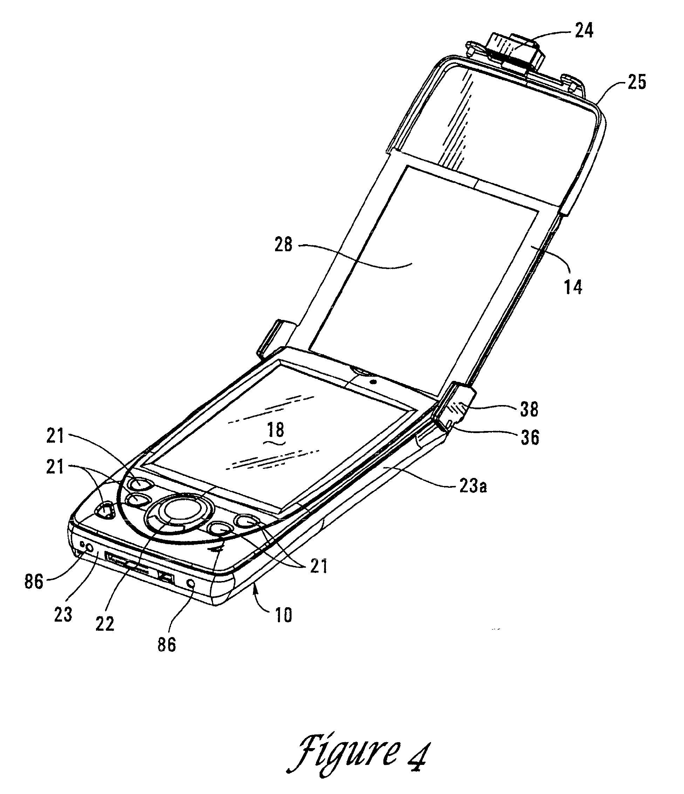

Figure 2 illustrates a device 10 to which a keyboard attachment 12, in accordance with a first embodiment of the invention, is pivotally attached. The keyboard attachment 12, in this embodiment, includes a substantially planar keyboard member 14 and a protective cover 16. Both the keyboard member 14 and protective cover 16 are connected to the device 10 in a manner whereby they can be separately pivoted relative to the device 10. This form of connection enables the protective cover 16 to move between a closed position, as shown in Figure 2, to an open position, as shown in Figure 3. Similarly, the keyboard member 14 is connected to the device 10 so that it can be moved between an in-use position, as shown in Figures 2 and 3, and an access position, as shown in Figure 4. In the in-use position the keyboard member 14 overlaps the front face of the device 10. In the access position, the keyboard member 14 is located away from the device 10 so that the device 10 can be readily accessed by the user.

The device 10 includes a display and touch screen 18 and may also include an input area 20. The input area 20 contains inputs through which a user can provide simple input to the device 10. The inputs may include an on/off button and up/down navigation buttons. However, other inputs in the form of simple 'quick launch' keys, 4-way navigation buttons, a plurality of alpha numeric or numeric buttons may also be included. However, to simplify the present Figures, only five such inputs 21 have been shown in the input area 20.

The device 10 has a serial port 22 which enables the device 10 to be electrically detachably connected to the keyboard member 14. The serial port 22 of the device 10 is located in the bottom side 23 of the device 10. This facilitates ready attachment of the device 10 to the keyboard member 14 via a serial port connector 24 located in the bottom side 25 of the keyboard member 14.

It is envisaged that the connection between the keyboard member 14 and the device 10 would be made via ribbon cable or other flexible cable having appropriately configured end connectors arranged to engage with the respective serial ports of the keyboard member 14 and the device 10.
The connection between the keyboard member 14 and the device 10 may also be achieved using a retractable connector. The connector would be retracted from the device 10 before use and would preferably, for aesthetic reasons, remain hidden from view when not in use. The connector would be connected to the port after the keyboard 14 is moved to a position in which it overlays the device 10.

Alternatively, connection between the keyboard member 14 and the device 10 may be achieved using a spring loaded connector. When the keyboard 26 is in an in-use position, the user pulls the spring loaded connector in an outward direction from the device 10 so as to release the connector. The connector is then snapped onto the connection port. The connector is preferably hidden from view when not in use.

The connection between the keyboard member 14 and the device 10 may also be achieved via a wireless connection. For example, an infra red connection. Bluetooth technology may also be incorporated.

Although, the serial ports of the respective device 10 and keyboard member 14 are envisaged to be located in their respective bottom sides 23, 25, other positionings of the serial ports are envisaged. It is proposed however that the serial ports of the respective device 10 and keyboard member 14 be located adjacent to one another when the device 10 is in use so that the flexible or ribbon cable used to connect them can be kept at a minimum.

Alternatively, the ribbon cable could be located at the top of the device 10. This would have the advantage that the distance between the keyboard attachment 12 and the device 10 would always be kept at a minimum, regardless of positioning of the keyboard member 14.

The keyboard member 14 is sized to be substantially the same planar dimension as the device 10. Adjacent its bottom side 25, the keyboard member 14 incorporates a keyboard 26. The keyboard 26 would preferably include all the features of a standard keyboard and is sized so that it is readily used by the user.

The keyboard member 14 also includes an opening or aperture 28, which as shown in Figures 3 and 4, is substantially rectangular. The opening 28 is positioned so that when the keyboard member 14 is in the in-use position, the opening 28 is coaxially aligned with the display screen 18 of the device 10. Consequently, when the keyboard member 14 is in the in-use position, the user will have proper sight and full access to the display and touch screen 18 of the device 10.

The cover 16 may be made of a transparent material so that the screen 18 can be viewed even when the cover 16 is in the closed position. It will however be appreciated that the user will have to open the cover 16 to access the display and touch screen 18.

When a user wishes to use the keyboard 26 to input to the device 10, the keyboard member 14 is pivoted to a position wherein it overlays the front face of the device. In this in-use position the inputs 21 of the input area 20 of the device 10 are covered so as to prevent use by the user. However, the user still has full access to the touch and display screen 18. The user connects the keyboard member 14 to the device 10 using the connector 24 and then the device 10 is ready for use.

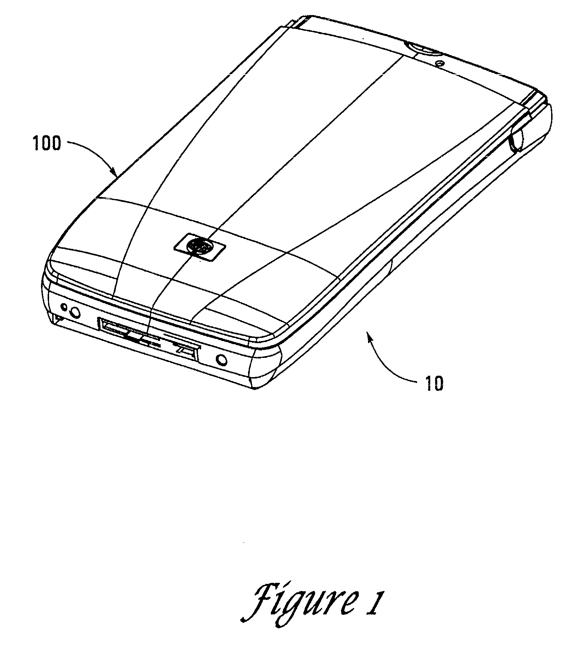

When the device 10 is not in-use, the connection between the keyboard member 14 and device 10 can be disconnected. The protective cover 16 can then be pivoted to the closed position so that it overlays the display screen 18. The protective cover 16 may be sized so that when it is in the closed position it only covers the opening 28 so as to protect the screen 18. Alternatively, the cover 16 may be sized that it covers the entire keyboard member 14 when in the closed position so as to provide protection for the keyboard 26. In this manner, the protective cover 16 would act to protect the entire front face of the device 10 in a fashion similar to that of the conventional protective cover illustrated in Figure 1.

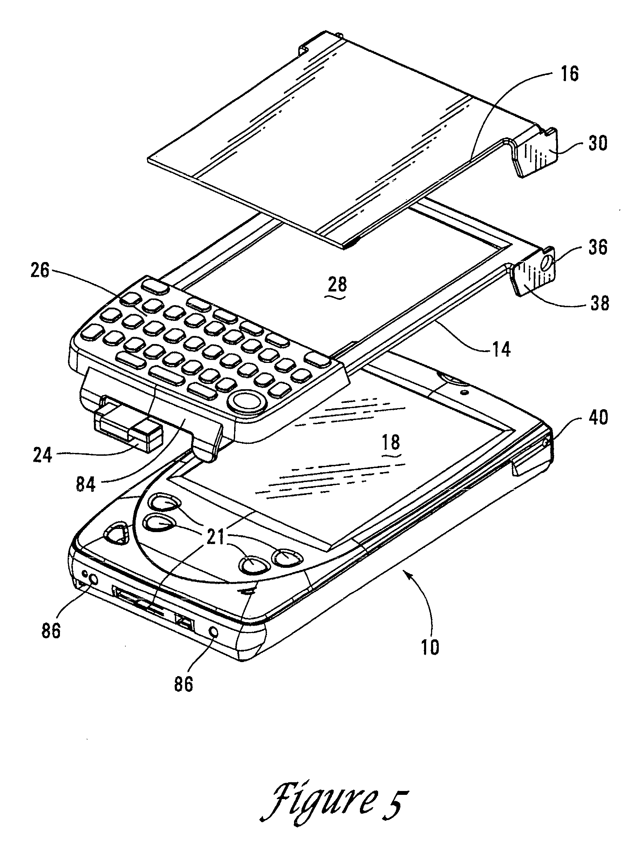

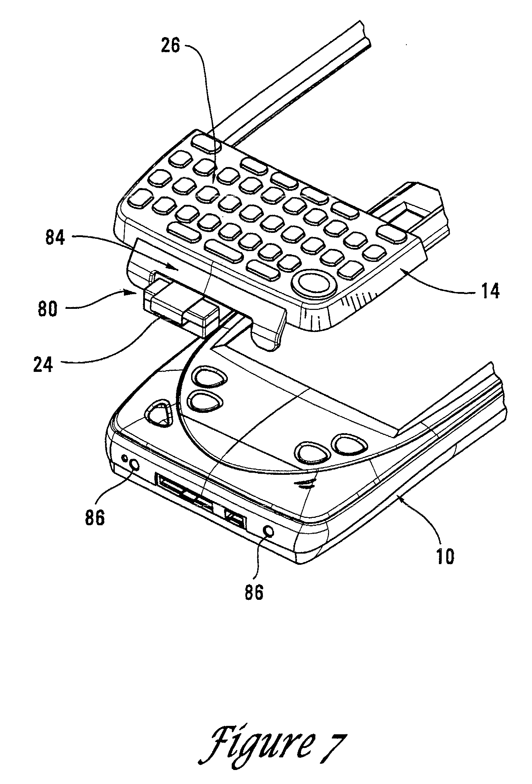

The keyboard member 14 includes a locking member 80 for locking the keyboard member 14 to the device 10. The locking member 80, as best illustrated in Figures 5 and 7, includes a pair of locking studs 82 mounted on a catch member 84. The locking studs 82 are arranged to fit with corresponding apertures 86 formed in the bottom side 23 of the device 10. The studs 82 are configured so that they engage into the apertures 86 when the keyboard member 14 is positioned to overlay the front face of the device 10. The locking member 80 is unlocked to free the keyboard member 14 for pivotal movement by deflecting the catch member 84 away from the bottom side 23 of the device 10, a sufficient distance to remove the studs 82 from their respective apertures 86.

The keyboard member 14 and protective cover 16 are pivotally connected to the device 10 by removing the conventional cover 100 (shown in Figure 1) and then by pivotally connecting the cover 16 and keyboard member 14 to the existing pivot aperture 40 in the side wall 23a of the device 10.

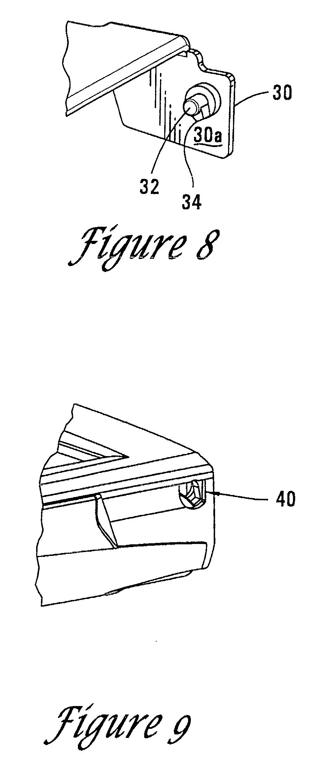

As best shown in Figures 5, 8 and 9, the cover 16 includes a hinge plate 30 which includes a hinge pin 32 and a detent mechanism 34 mounted on an inner face 30a thereof. The hinge pin 32 and detent mechanism 34 are arranged to extend through an aperture 36 formed in a hinge plate 38 located on the keyboard member 14 and to locate within the aperture 40 formed in the side wall 23a of the device 10. The detent mechanism 34, aperture 36 and aperture 40 of the device 10 are arranged so that the cover 16 and keyboard member 14 are prevented from inadvertently falling back over the device 10 once they have been pivoted to the access position by the user.

The protective cover 16 and keyboard member 14 are preferably made from lightweight materials such as a plastics material. This means that the additional weight of the device 10 with the keyboard attachment 12 is not that high. It will be appreciated that it is desirable to maintain the combined unit weight to a minimum. It will also be appreciated that the configuration of the keyboard member 14 and protective cover 16 is such that it does not increase the planar dimension of the device 10, although there is necessarily some increase in the thickness of the combined unit as opposed to the thickness of the device 10 alone.

The device 10 with pivotally connected keyboard attachment 12 is particularly advantageous because the user is provided with a complete keyboard 26 which the user can use to provide input to the device 10. The combined unit and the flexible or ribbon connector 24 required to connect the keyboard attachment 14 to the device 10 can be readily carried by the user, thus there is no change in the portability of the device 10. It will also be appreciated that the pivotal connection between the cover 16, keyboard member 14 and the device 10 is such that the keyboard member 14 and cover 16 can be readily removed therefrom without damage thereto if required. Additionally, the keyboard member 14 and protective cover 16 can be pivoted to the access position where after the device 10 can still be connected via the serial port to a standard keyboard. This means that the user has the option to use the keyboard 26 on the keyboard member 14, use the inputs 21 on the input area 20 or alternatively, when in an office environment, still attach the device 10 to a standard sized keyboard if required.

It is envisaged that the underside of the protective cover 16 and/or the underside of the keyboard member 14 may be provided with a light source so that when the cover 16 is in the open position, as shown in Figure 3, the cover 16 can provide light to better view the display screen 18. Altematively, when the cover 16 and keyboard member 14 are both in the access position the light source from the underside of the keyboard member 14 could also be used to better view the display screen 18 of the device 10.

Although the above embodiment has been described with both a keyboard member 14 and a protective cover 16 it is envisaged that the protective cover 16 may not be included. The keyboard member 14 may not include a mechanism for providing protection to the display screen 18 of the device 10, or alternatively, may include a snap fit cover or other component for covering the opening 28 of the keyboard member 14 so as to protect the screen 18.

The protective cover 16 could also be formed as a mini magnifying glass. This would enable the contents of the display screen 18 to be enlarged.

The protective cover 16 may also be formed so as to include an internal aperture or a slot for holding a photo or the like.

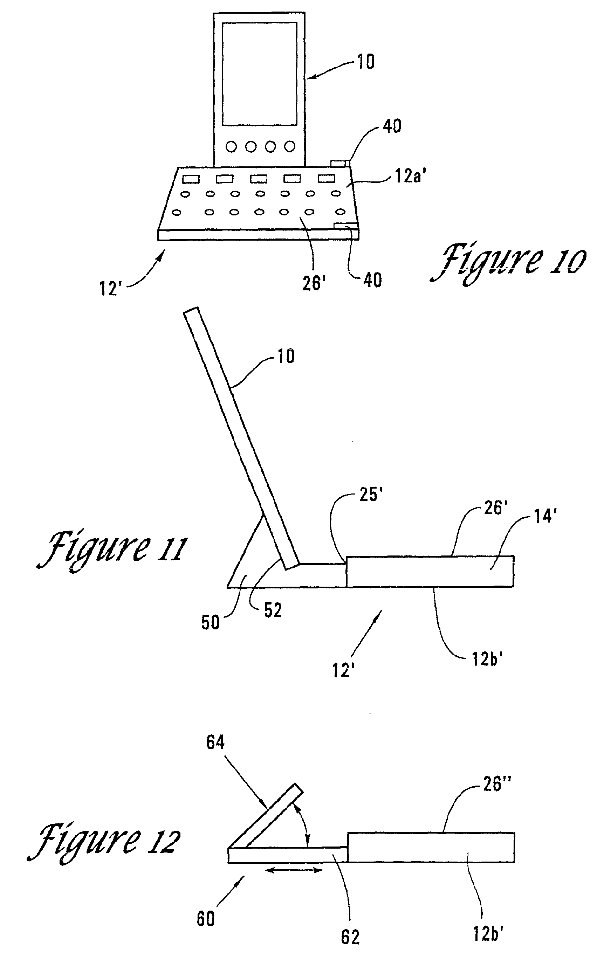

Figures 10 and 11 illustrate a second embodiment of the invention. In accordance with this second embodiment, the keyboard attachment 12' is of substantially the same or slightly smaller dimension to the front face of the device 10. The keyboard attachment 12' has an inner surface 12a' which includes a keyboard 26' and an outer surface 12b'. The outer surface 12b' acts as a cover when the keyboard attachment 12' is secured to the device 10 so that the inner surface 12a' is located adjacent the screen 18 of the device 10.

When the device 10 is not in use, the keyboard attachment 12' can be hingedly connected to the device 10 using the hinges 40. In this way, the device 10 and keyboard attachment 12' can be readily attached together to form a combined unit. This combined unit can be readily carried by the user.
The keyboard attachment 12' when attached to the device 10 covers the front face of the device 10 so that the keyboard 26' is located substantially adjacent to the display screen 18 and the inputs 21 on the device 10. In this manner accidental damage to the display screen 18 is prevented. The keyboard 26, being located on the inner surface 12a' of the keyboard attachment 12', is also similarly protected.

It will also be appreciated that the connection between the keyboard attachment 12' and device 10 when attached to form a combined unit is such that it is effectively "sealed". Accordingly, dirt or other material cannot contact the screen 18 or the keyboard 26 so as to cause damage thereto.

As best illustrated in Figure 11, the keyboard attachment 12' includes a support 50 for the device 10. The support 50 extends from the keyboard attachment 12' and includes an inclined rest surface 52 against which the rear surface of the device 10 can be rested during use. The angle of inclination of the rest surface 52 is such that when the device 10 is rested there against, the display screen 18 of the device 10 is readily viewed by the user. The angle of inclination is preferably about 60° from the horizontal.

The support 50 may be permanently connected to the keyboard attachment 12' or may be snapped connected or otherwise fitted to the keyboard attachment 12' as required.

The keyboard attachment 12' is arranged to be connected to the device 10 via a serial port located on one side 25' of the keyboard attachment 12'.

Alternatively, the serial port may be located in a portion of the support 50 or another extension of the keyboard attachment 12'. In either case, the serial port located in the extension or the support 50 would be arranged to be electrically connected to the keyboard attachment 12'. The device 10 includes a mating serial port on the bottom side 23 of the device 10 or in an alternative appropriately located position on the device 10.

As shown in Figure 10, and as described above, the keyboard attachment 12' can be hingedly connected to the device 10 via hinges 40 when the keyboard 26 is not in use. However, other means for attaching the keyboard attachment 12' to the device 10 are envisaged. For example, the keyboard attachment 12' may be snap fitted or clipped to the device 10.

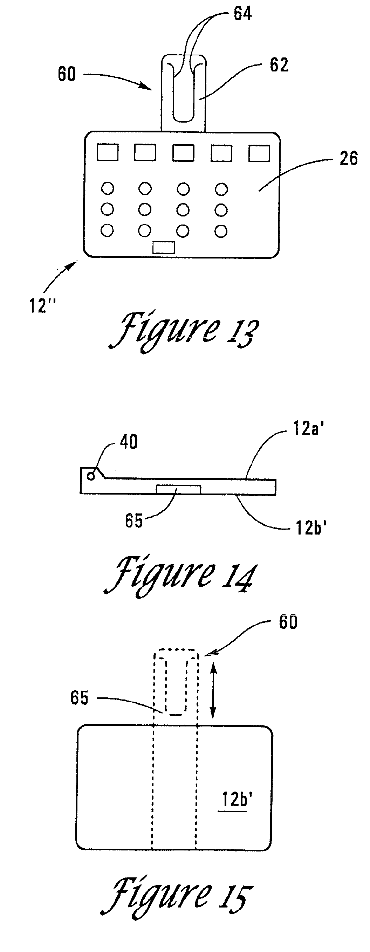

Figures 12 to 15 illustrate a third embodiment of the invention. In this embodiment, the keyboard attachment 12" is of a similar configuration to that described in relation to the embodiment of Figure 10. However, instead of including a separate support 50, the keyboard attachment 12" includes a retractable support device support 60. The retractable support device 60 includes a horizontal retraction member 62 and a pair of pivotable support arms 64. The horizontal retraction member 62 is arranged for sliding engagement with a portion or opening 65 in the keyboard attachment 12", whilst the pivotable support arms 64 are pivotable between a storage and an in-use position. In the in-use position the pivotable support arms 64 are arranged so that a device 10 can be positioned there against so that the display screen 18 of the device 10 can be readily viewed by the user. When device 10 is not in-use, the pivotable support arms 64 can be pivoted to a position where they lie substantially against the retractable member 62 and so that the retractable member 62 together with pivotable support arms 64 can then be retracted into the portion or opening 65 of the keyboard attachment 12". To achieve this, the keyboard attachment 12" will need to include an appropriately configured portion or opening 65 which is arranged to receive the retractable support device 60 when it is not in-use.

The horizontal retraction member 62 is preferably made from a plastic material, whilst the pivotable support arms 64 are preferably made from a material such as aluminum. This choice of material provides the required strength to each of the components while minimizing the weight thereof.

The keyboard attachment 12" of Figures 12 to 15 attaches to the device 10 in the same manner as described in relation to the embodiment shown in Figures 10 and 11.

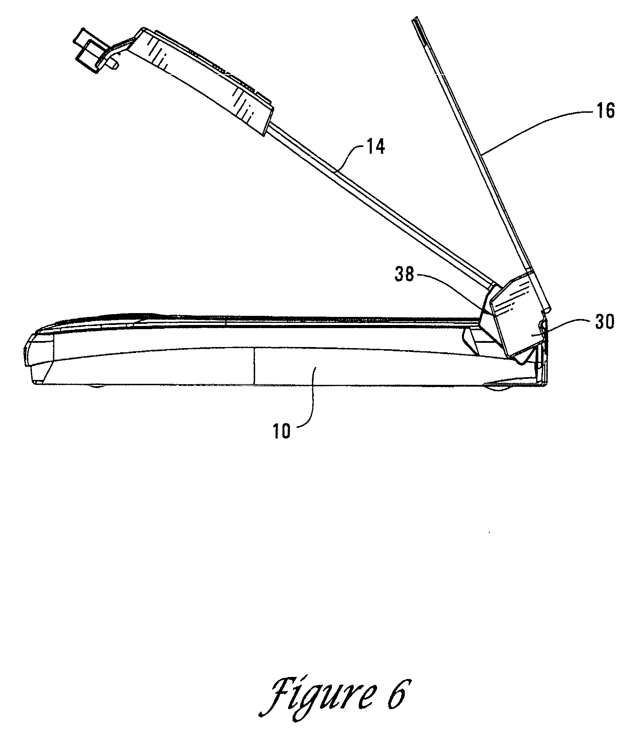

It will be appreciated by those skilled in the art that the keyboard attachments described herein can be readily attached and detached from a device by a user without causing any damage to the device. The keyboard attachments described herein in relation to Figures 1 to 11 may be fitted to a user's device simply by removing the existing cover. Alternatively, devices may be sold to the user with a keyboard attachment already fitted.

While the embodiments described herein are preferred it will be appreciated from the specification that various alternatives, modifications, variations or improvements therein which may be made by those skilled in the art are within the scope of the invention, which is defined by the claims.

The disclosures in United States patent application No. 09/876,670, from which this application claims priority, and in the abstract accompanying this application are incorporated herein by reference.

## Claims

1. A keyboard attachment including a keyboard member having a keyboard, an electrical connection means for detachably connecting the keyboard to an electronic device and an attachment means for detachably mounting the keyboard member to the electronic device, said attachment means enabling attachment and detachment of the keyboard member to the electronic device without any damage thereto.

2. A keyboard attachment according to claim 1 wherein the electrical connection means includes a flexible or ribbon cable, a connector and serial port arrangement or a connector and universal serial bus port arrangement.

3. A keyboard attachment according to claim 1 or 2, which is sized substantially the same or of a smaller planar dimension than the electronic device.

4. A keyboard attachment according to claim 1, 2 or 3, wherein the keyboard member is arranged to overlay a front face of the electronic device when it is attached to the device ready for use.

5. A keyboard attachment according to claim 4, including means to enable the user to view a display screen of the electronic device when the keyboard member is positioned to overlay the electronic device.

6. A keyboard attachment according to claim 5, wherein the viewing means is a transparent portion of the keyboard member or an aperture or opening in the keyboard member which is substantially aligned with the display screen so that the user can view the display screen through the aperture or opening and/or can touch the display screen to provide a touch input to the electronic device.

7. A keyboard attachment according to any preceding claim, wherein the attachment means enables the keyboard member to pivot between an in-use position in which it overlays the electronic device and an access position in which it is clear of a front face of the electronic and whereby the user can readily access the front face of the electronic device.

8. A keyboard attachment according to any preceding claim, including a locking means between the keyboard member and the electronic device to enable the keyboard member to be locked in an in-use position.

9. A keyboard attachment according to any preceding claim, including a detent mechanism for preventing the keyboard member from inadvertently moving between an access position where a user can access the electronic device and an in-use position wherein the keyboard member overlays a front face of the electronic device.

10. A keyboard attachment for a device having a display screen and at least one input, said keyboard attachment incorporating a keyboard which is arranged to be connected to the device so that the keyboard can be used to provide input to the device, said keyboard attachment including a support means arranged to support the device when it is connected to the keyboard attachment and wherein when the device is not in use, the keyboard attachment can be attached to the device to form a combined unit in which the display screen and said at least one input are located adjacent the keyboard attachment.

11. A keyboard attachment according to claim 10, wherein the combined unit is arranged so that access to the screen or keyboard is prevented.

12. A keyboard attachment according to claim 10 or 11, wherein the support means is arranged so that the device during use is supported so that the display screen of the device can be readily viewed by the user.

13. A keyboard attachment according to claim 12 wherein the support means includes an inclined rest surface.

14. A keyboard attachment for a device having a display screen and at least one input, said keyboard attachment including a keyboard member incorporating a keyboard which is arranged to be connected to the device so that the keyboard can be used to provide input to the device when it is connected to the device and a support means arranged to support the device during use thereof so that the display screen of the device can be readily viewed by a user and wherein the support means is movable between a position in which it is at least partially contained within the keyboard member and a position in which it extends therefrom.

15. A keyboard attachment according to claim 14, wherein the support means includes a serial port arranged to engage with a mating serial port on the device.

16. A keyboard attachment according to claim 14 or 15, wherein the support means includes at least one horizontal retraction member and at least one pivotal support arm pivotally attached to a free end of the at least one horizontal retraction member.

17. A keyboard attachment according to claim 14, 15 or 16, wherein the keyboard member includes a substantially centrally located aperture for receiving the support means.

18. An information device having a display screen and at least one input further including a keyboard attachment, said keyboard attachment including a keyboard member incorporating a keyboard, the keyboard member being arranged for connection to the device so that the keyboard can be used to provide input to the device and wherein during use of the keyboard a portion of the keyboard attachment is positioned so that said at least one input is covered to prevent use by a user and the display screen is viewable by the user.

19. An information device having a display screen and at least one input further including a keyboard attachment, said keyboard attachment including a keyboard which in use is arranged to provide input to the device, said keyboard attachment including a support means arranged to support the device when in use and wherein when the device is not in use, the keyboard attachment can be secured to the device with the display screen and said at least one input located adjacent the keyboard attachment.

20. An information device according to claim 19, wherein when the device is not in use the keyboard attachment can be secured to the device to form a combined unit so that access to the screen or keyboard is prevented.
